# EUROPEAN PATENT APPLICATION

(11) **EP 4 813 579 A1**
(43) Date of publication of application: **30.09.2026**
(21) Application number: 25166827.3
(22) Date of filing: 27.03.2025
(51) Int. Cl.: B25J 1/00, B60L 53/80, H01M 50/262

(54) **MOBILE ROBOT WITH SWAPPABLE BATTERY UNIT AND BATTERY CHANGING TOOL**

(71) Applicant: Hexagon Robotics GmbH, 8045 Zürich (CH)
(72) Inventor: STEFFEN, Roman, 9445 Rebstein (CH); HEINZLE, Lukas, 8820 Wädenswil (CH); GOHL, Pascal, 8400 Winterthur (CH); KOGINOV, Gleb, 8045 Zürich (CH)
(74) Representative: Kaminski Harmann

(57) **Abstract**

The invention relates to a system a method for exchanging a swappable battery of a mobile robot (1). The system comprises a swappable battery unit (2) and corresponding battery changing tool (3). The battery changing tool (3) configured to take, hold against the gravity and transfer said battery unit (2) during (i) an insertion of the battery unit (2) into the battery dock (15) of the robot (1) or a charging unit (50), and (ii) a removal of the battery unit (2) from the battery dock (15) of the robot (1) or the charging unit (50). The battery unit (1) comprises at least one holding area (231) configured to be contacted with the battery changing tool (3).

## Description

### FIELD OF THE INVENTION

The present invention relates to a swappable battery unit and a tool to remove and insert said battery into a mobile robot. The invention also relates to a mobile robot, a battery charging station and a transport robot having said system, as well as a method of exchanging the swappable battery of a mobile robot, particularly a method, wherein the robot itself performs said battery replacement.

### BACKGROUND OF THE INVENTION

Mobile robots, and particularly humanoid robots, play an ever-increasing role in the contemporary manufacturing environments. Humanoid robots within the meaning of the invention are mobile robots capable of performing tasks performed by human workers, and/or sharing a common workstation with human workers, and/or participating in direct human-robot interactions, such as handing over or picking up a workpiece or a tool, following verbal instructions and the like.

To facilitate the use of such robots without costly modifications of the current factory environment, humanoid robots must be able to orient themselves, in particular without the installation of further external navigation systems, and traverse obstacles such as stairs or doors. By the way of example, such humanoid robots are equipped with one or more arms with corresponding end-effectors for performing a given work task. One of the end-effectors might be a human hand alike. The robot also comprises a locomotion unit, which may be a legged locomotion unit, configured to propel the robot on uneven ground and in particular to enable stair climbing. The robot also comprises an environmental perception unit, e.g. a set of cameras or a scanning lidar unit, and particularly an autonomous navigation system. Preferably, the robot is similar in dimensions to an average person, i.e. between 100 and 200 cm in height and between 30 and 120 kg, preferably about 175 cm tall and weighing about 60 kg.

To enable an autonomous execution of the tasks the robot itself must carry its power source. Although many options would be possible in principle, the requirements of indoor use in practice limit the energy sources to rechargeable batteries. Due to the above-mentioned size restrictions, the available space for batteries, and thus the total energy stored in the batteries is limited. Taking these limitations into account, the capacity of contemporary batteries usually corresponds to a few hours of work, which is much shorter than a typical shift of a human worker. Due to the technological limitations of batteries, charging times are comparable to usage times.

A prior art solution for the above problem is to provide a replacement robot which is deployed during the charging of the originally deployed robot. Providing a complete robot with all its components is not only ineffective for reasons of cost and storage space but also leads to unnecessary consumption of natural resources.

Providing a robot with swappable batteries is therefore an advantageous solution. However, manually replacing the heavy battery units is a strenuous task, especially considering the limited space available. At least in the initial phase of battery removal, the workers have to move the battery unit using only their wrists and fingers. This task is not only harmful to the health of workers over long periods of time but is also a potential source of accidents.

Performing said task by a general purpose, human hand-alike, end-effector of the robot would eliminate the above health related considerations, however, would lead to an increased wear to the delicate and therefore expensive component.

In view of the above considerations an improved solution for reliably and quickly replace the batteries of a mobile robot is requested.

### OBJECT OF THE INVENTION

In view of the above circumstances, one object of the present invention is to provide a battery and a battery changing tool to perform a battery exchange of a mobile robot.

A further objective of the invention is to equip a mobile robot such that it can perform said battery replacement automatically, particularly while being powered using an additional swappable battery.

A further objective of the invention is to provide a battery charging station and/or a dedicated battery transport robot for performing said battery replacement automatically.

These objectives are at least partly achieved by realizing the characterizing features of the independent claims. Features which further develop the invention in an alternative or advantageous manner are described in the dependent claims.

### SUMMARY OF THE INVENTION

A first aspect of the invention relates to a system for a mobile robot. The system comprises at least one swappable battery unit and a corresponding battery exchange tool. Mobile robots in the sense of the invention represent a class of robots having a locomotion unit configured to propel the robot between workstations, other places of interest, and waypoints. Particularly such robots might autonomously plot their path between said locations. Preferably, mobile robots are of the magnitude of a human being, i.e. they are less massive than a passenger car and more massive than a toaster. Preferably, the mobile robots are designed as humanoid robots with at least one, in particular two, arms with corresponding end-effectors and one or more legs, in particular when the one or more legs are configured to perform a walking movement. It is clear for the skilled person that the inventive system is not limited to be used with mobile robots.

The at least one swappable battery unit is configured to (i) be insertable into a battery dock of the robot, and (ii) provide electrical energy for operating the robot. In other words, the swappable battery units are intended to be a main power source for the mobile robot and not an auxiliary element. By way of example, swappable battery units according to the invention might have cuboid shape with edge length in the range of 50-300 mm, a weight of 1-4 kg, and a capacity of 90-1000 Wh, particularly 200-500 Wh, depending on the intended use of the robot, particularly the accessibility of the charging stations in the work environment. It is clear for the skilled person that a mobile robot might utilize a plurality of such battery units, particularly having at least two battery units is advantageous as it enables at least limited operations during the replacement of the battery units. Such limited operation especially includes the performance of the battery replacement.

Battery docks in the sense of the invention is an internal volume or an external surface, particularly depressed surfaces, shaped for receiving the swappable battery unit. Moreover, battery docks comprise electrical and data communication elements required for the operation of the battery unit, respectively the robot. External battery docks are advantageous for the ease of access. Internal battery docks, i.e. battery cavities, provide more protected environment. The latter is advantageous to reduce the risk of environmental damage, accidents such as unintended disconnection of the battery or the risks of theft. From here on only embodiments with battery cavities are discussed in more detail. Unless otherwise provided the battery cavities represent the more general case of battery docks. The skilled person can apply the teaching to external battery docks correspondingly.

The battery unit comprises (i) a first energy storage unit configured to store electrical energy, and (ii) a first electrical interface in electrical communication with the first energy storage unit thereby enabling a flow of electrical energy from or to the first energy storage unit. The skilled person understands that many implementations of the battery unit exist. The first energy storage unit in the sense of the invention is a structurally and functionally integral element. The first energy storage unit might nevertheless comprise a plurality of coupled electrochemical cells or similar elements. The battery unit might comprise one or more energy storage units with corresponding electrical interfaces. A first or any further energy storage unit in the sense of the invention might work on the basis electrochemical principles, particularly realized as a solid-state battery or as an electrochemical battery with liquid electrolyte. The battery unit might utilize alkaline ions, particularly lithium ions, as charge carriers. Other charge carriers such as alkaline-earth or aluminum ions are also possible. Battery units having different working principles such as hydrogen-based batteries are possible within the sense of the invention. The applicability of the present invention is to a wide degree independent of the applied energy storage method.

The battery unit also comprises a lock element configured to provide a locked state preventing the removal of the inserted battery unit and a released state enabling the removal of the inserted battery unit. Providing the batteries with such releasable locking elements facilitates the easy replacement of the battery units. This is particularly advantageous when the replacement of the battery unit is performed without human intervention. Such releasable locking elements are known in the prior art and can be adapted to the claimed purpose through routine experimentation.

The battery unit might comprise a specific release element configured to actuate the released state by an interaction between the lock and release elements. The interaction might be a mechanical interaction. More particularly, the release element might comprise a first button. The release element might actuate the released state when the first button is actuated.

The changing tool configured to take, hold against the gravity and transfer said battery unit during (i) an insertion of the battery unit into the battery dock of the robot or a charging unit, and (ii) a removal of the battery unit from the battery dock of the robot or the charging unit.

In embodiments according to a first aspect of the invention, the battery unit comprises a first holding area. The first holding area is embodied as a recess projecting inwards from a first surface in a pulling direction. The battery unit might be foreseen to be inserted into the battery cavity of the robot or the charging unit such that the first surface is accessible from the outside. Thus, the recess is accessible even when the battery is inserted. The first holding area is associated with holding counterelement comprising or being made of a ferromagnetic material, in particular mild steel.

The tool comprises a magnetic holder. The magnetic holder (i) is dimensioned to cooperate with the recess, particularly to fit tightly into said recess, and (ii) comprises or embodied as an electromagnet. An interaction between the magnetic holder and the holding counterelement generates a holding force securing the battery unit to the battery changing tool. Said interaction comprises on the one hand the magnetic force acting between the activated electromagnet and the ferromagnetic element and a mechanical force resulting from the mechanical contact between magnetic holder and the recess. Particularly the holder is fitting into the recess tightly, thus a holder inserted into the recess limits the translative motion of the battery unit with respect to a recess to a one-dimensional movement along the direction of pulling. An activating of the electromagnet prevents also that movement. The components of the recess and the magnetic holder are dimensioned such that a battery changing tool can firmly hold and manipulate the battery. In other words, the inventive magnetic holder is configured to co-operate with the above-mentioned recess. Nevertheless, it does not mean that it cannot perform a variety of further tasks, particularly it might pick up ferromagnetic workpieces or tools which are similar or lower weight than the battery unit.

In some embodiments, the release element comprises a first button. The mechanical actuation of the first button causes an actuation of the release element. The first button extends into the recess when not actuated. The holder is configured to mechanically actuate a first button, when inserted into the recess. The first button might be arranged to the sidewalls or jacket of the recess. Particularly the first button might be realized as one or more balls configured to at least partially escape into the sidewall when mechanically actuated. Alternatively, the first button might be arranged into a distal plane of the recess, wherein the distal plane is the plane the furthest from the first surface. In these implementations the first button might at least partially escape into the distal plane, when mechanically actuated.

In some embodiments, the electromagnet and the holding counterelement are dimensioned such that the interaction between the two is sufficient to firmly hold the battery unit against the gravity in any orientation of the tool. In alternative embodiments, the electromagnetic interaction is sufficient to hold the battery unit against gravity only in a restricted orientation range. This alternative allows the use of weaker, thus less expensive, magnetic materials in the core and/or to reduce the power consumption of the electromagnet.

In some embodiments, the recess and/or the first button are configured to provide a form-lock preventing a rotation of the battery unit about the magnetic holder. In other words, the battery is not only secured but rigidly locked to the battery changing tool. The advantage of this embodiment is that the battery unit can be replaced without monitoring the current alignment.

In some specific embodiments, the recess is shaped to provide such form lock. A non-exclusive list includes the cases wherein the recess has (i) a polygonal, particularly triangular, quadratic or hexagonal cross section when viewed from the pulling direction, (ii) a concave shaped cross section when viewed from the pulling direction, particularly comprising a bar and/or a groove, or (iii) a sector shaped cross section when viewed from the pulling direction, particularly a semicircular cross section. The recess might also have two parts with different cross sections, thus the taking of the battery comprises an inserting of the magnetic holder in the outer part of the recess and subsequently turning the magnetic holder to advance into the inner part of the recess.

In some specific embodiments, the first button, or a compartment of the first button, is shaped to provide such form lock. Particularly the first button or its compartment might have triangular, quadratic or hexagonal cross section when viewed from the pulling direction.

Alternatively, the recess might have a circular cross-section to allow a rotational invariant insertion of the battery changing tool. The battery insertion tool might comprise an inclinometer or similar sensors to provide an orientation aid. Particularly perception elements of the robot might provide such orientation information.

In some embodiments, the tool and the battery unit further comprise respective communication elements. The communication elements are configured to establish a data exchange between the tool and the battery unit to provide battery data to the tool. The communication elements might be embodied as wireless communication elements, more particularly near field communication elements. The communication element of the tool might be further configured to share battery data with the robot mounting the tool. The battery data might comprise battery identifier, compatibility data, and charge state data. The latter is particularly advantageous when selecting a replacement battery unit, as it provides the tool or robot with information on which battery units are compatible and fully (or at least mostly) charged. This allows the selection of the most suitable battery unit.

Alternatively or additionally, the battery changing tool and the swappable battery unit might comprise corresponding wired connectors. Said wired connectors, which might be electrical or optical connectors, might be brought into communicative coupling during a battery changing. The wired connection might be realized using pogo pins arranged on the battery unit or on the battery changing tool.

In some embodiments, the first electrical interface is assigned to a fourth surface of the battery unit. The fourth surface is the surface which is furthest away from the first holding area, or in alternative wording from the first surface, along the pulling direction. The fourth surface thus can be considered as the inner surface, while the first surface can be considered as the outer surface of the battery unit. While such arrangement is advantageous due to the safer location and contacting mode other interface arrangements are also possible for an inventive battery unit.

In some specific embodiments, the battery unit comprises (i) a second energy storage unit configured to store electrical energy, and (ii) a second electrical interface assigned to the fourth surface and being in electrical communication with the second energy storage unit thereby enabling a flow of electrical energy from or to the second energy storage unit. The first and second electrical interfaces are functionally equivalent. The battery unit is mirror-symmetrical with respect to an arrangement of the first and second electrical interfaces. This embodiment is particularly advantageous when the battery docks of the robot are oriented differently than the battery docks of the charging unit (e.g. vertical and horizontal). In this embodiment the required orientation change is always less than 90°. This not only simplifies the task but reduces wear and tear on the device handling the battery replacement tool, and/or the strain on the human operator carrying out this task. Alternative mirror symmetrical arrangements can also be realized, e.g. the battery unit might have the first electrical interface on the top surface and the second electrical interface on the bottom surface. For battery units with square shaped cross section arranging four electrical interfaces in four-fold symmetry is also possible.

In some embodiments, the first holding area is designed in such a way that the actuation of the release element by a human hand is hindered, in particular prevented. By way of example, the battery unit might be designed such that the first button is recessed, thus not accessible by the fingers. A tamper-proof design is not only beneficial to prevent criminal acts, such as theft of the battery unit or malicious deactivation of a robot, but also against accidental disconnection of the battery which can damage the battery unit and/or the robot.

In some embodiments, the first button comprises a reset element configured to counteract an actuation of the first button and to reset it to an unactuated state. The release element provides the released state only when the first button is actuated. This embodiment is particularly advantageous in combination with the embodiment mentioned in the previous paragraph. In other words, removing the battery unit requires dedicated action and the use of the battery changing tool according to the inventive aspect.

A second aspect of the invention relates to a system for a mobile robot. The system comprises at least one swappable battery unit and a corresponding battery exchange tool. The considerations from the first aspect with respect to mobile robots are correspondingly applicable.

The at least one swappable battery unit is configured to (i) be insertable into a battery dock of the robot, and (ii) provide electrical energy for operating the robot. The battery unit also comprise (iii) a lock element configured to provide a locked state preventing the removal of the inserted battery unit and a released state enabling the removal of the inserted battery unit, and (iv) a release element configured to actuate the released state by a mechanical interaction between the lock and release elements. The considerations from the first aspect with respect to swappable battery unit are correspondingly applicable

The release element comprises a first button and actuates the released state when the first button is actuated. The first button is arranged to a third surface of the battery unit. The third surface might be considered as the top surface of a battery unit for non-symmetrical battery units. As will be shown later, this implementation can advantageously enable a tamper-free design of the swappable battery unit.

The battery unit comprises a second and a third holding areas. The second holding area is formed at a second surface of the housing. The second surface is opposite to the third surface. In the particular case when the third surface is the top surface, the second surface can be considered as the bottom surface, i.e. the surface on which the weight of the battery unit might rest during the transfer of the battery unit. The second holding area is located inwardly with respect to a second wall section extending orthogonally to the pulling direction and projecting above the second holding area. In other words, the battery unit comprises a rail, bar or similar blocking element and the second holding area is a depression behind said rail.

The third holding area is formed about the first button and located inwardly with respect to a first wall section extending orthogonally to a pulling direction and projecting above the third holding area. In other words, the battery unit comprises a rail, bar or similar blocking element and the third holding area is a depression behind said rail. Particularly said wall sections might be used during the gripping of the battery unit as positioning aids. Additionally or alternatively, a contact force applied against the wall sections might provide a part of a holding force securing the battery unit to the battery changing tool. The third holding section and the first wall section are designed such to enable an actuation of the first button during a gripping of the battery. The gripping might require the inventive battery changing tool.

The battery changing tool is configured to take, hold against the gravity and transfer said battery unit during (i) an insertion of the battery unit into the battery dock of the robot or a charging unit, and (ii) a removal of the battery unit from the battery dock of the robot. or the charging unit. A tool according to the second aspect of the invention, unlike that of according to the first aspect, is configured to perform these tasks based on mechanical principles. Particularly the tool is configured to hold the battery unit passively without requiring a supply of electrical energy.

The tool comprises a first tool part with a first gripper, a second tool part with a second gripper, and a constraining element. The tool is configured to provide a gripping state. In the gripping state the first gripper exerts a gripping force acting in a direction towards the second gripper. The gripping force acts as a holding force securing the battery unit to the battery changing tool.

The first and second tool parts are movably interconnected by the constraining element. The constraining element is configured to provide a restoring force acting against the separation of the first and the second tool parts. Particularly, the constraining element might provide a restoring force which increases with the increasing separation in the working range. Elastic elements such as torsion bars, leaf springs or spiral springs are known to have the above-mentioned properties.

The first gripper comprises an anchoring member configured for anchoring the first gripper against the third holding area. Particularly the first gripper might be anchored against the first wall section of the battery unit. When the first gripper is anchored, a separation force acting on the second tool part in excess of the restoring force causes an increase in the distance between the first and second tool parts. The second tool part comprises an actuating portion configured to receive an external force providing the separation force. By way of example, the first tool part can be hooked against the first wall section, whereas the second tool part might be pulled downwards, e.g., using the motorized arm of the mobile robot.

In some embodiments, a mechanical blocking element is arranged on the first tool part. The tool is configured (i) to provide an arrested state by the mechanical blocking element, wherein a relative pose of the first and second tool parts is fixed in an arrested state, and (ii) to translate from the arrested state to the gripping state under the influence of the external force. In other words, the first tool part and the second tool part can be brought into a stable position, wherein the mechanical blocking element provides a counterforce counteracting to the restoring force provided by the constraining element. The skilled person understands that no gripping force is exerted in the arrested state, i.e. the gripping and arrested states are contrary to each other. Such setup is advantageous as the tool can be brought into an opened state, wherein the distance between the first and second grippers is increased as compared to a state wherein the restoring force is zero. Said opened state is advantageous as an approach of the holding areas by the gripper is simplified.

In some specific embodiments, the tool provides (i) a first movement path for a relative movement of the first and second tool parts, wherein an interaction between the second tool part and the mechanical blocking element is ensured, and (ii) a second movement path for a relative movement of the first and second tool parts, wherein an interaction between the second tool part and the mechanical blocking element is avoided. In other words, the arrested state can be provided and removed by specific movements of the tool parts with respect to each other.

In some specific embodiments, the constraining element is embodied as a tension spring. The second tool part comprises (i) a first portion comprising a flat section to be positioned against the battery unit during the gripping, (ii) a second portion comprising a resting surface, and (iii) a tool cavity between the first and second portions, the tool cavity comprises an opening and a tapered portion adjoining the opening. The second gripper projects from the first portion and extends beyond a plane defined by the flat section. The first tool part comprises (i) a stem dimensioned to fit into the tapered portion in a movable manner, and (ii) a snap head, as the mechanical blocking element. The stem is tilted towards the first portion in the gripping state and tilted towards the second portion in the arrested state. The snap head is configured to provide the arrested state via an interaction with the resting surface. In other words, the movement of the snap head and with that first tool part is blocked by the resting surface. By way of example, the snap head and the stem are formed integrally, however this is optional, the snap head and the stem might be formed as two separate pieces. Moreover, rigid mechanical contact between the snap head and the stem, while advantageous, is also not strictly necessary. The first gripper projects from the stem and extends beyond the plane defined by the flat section. In other words, the first tool can be imagined as a generally U-shaped element, wherein the width of the U is variable.

In some embodiments, the actuating portion is embodied as a tool interface. The tool interface is configured to interact with a corresponding tool counter-interface located in the robot. The tool interface might be located on the second tool part. The tool counter-interface might be in an arm of the mobile robot. Advantageously, the tool interface is located on a distal part of the arm, which has a large accessible orientation and positioning space. In some alternative embodiments, the actuating portion is embodied as a shaft enabling the tool to be held by a robot manipulator.

In some embodiments, the tool and the battery unit further comprise respective communication elements. The communication elements are configured to establish a data exchange between the tool and the battery unit to provide battery data to the tool. The communication elements are analogous to the one mentioned with respect to the first aspect. The considerations mentioned there are correspondingly applicable.

In some embodiments, the first electrical interface is assigned to a fourth surface of the battery unit. The fourth surface is the surface, which is furthest away from the third holding area, or in alternative wording from the first surface, along the pulling direction. The fourth surface thus can be considered as the inner surface, the second and third surfaces might be considered as the bottom and top surfaces. The holding areas are located in the vicinity of a first surface which might be considered as the outer surface.

In some specific embodiments, the battery unit comprises (i) a second energy storage unit configured to store electrical energy, and (ii) a second electrical interface assigned to the fourth surface and being in electrical communication with the second energy storage unit thereby enabling a flow of electrical energy from or to the second energy storage unit. The first and second electrical interfaces are functionally equivalent. The battery unit is mirror-symmetrical with respect to an arrangement of the electrical interfaces. These features are analogous to the one mentioned with respect to the first aspect. The considerations mentioned there are correspondingly applicable.

In some embodiments, the third holding area is designed in such a way that the actuation of the release element by a human hand is hindered, in particular prevented. For embodiments having a second button, the second holding area might be designed in a similar manner. By way of example, the battery unit might be designed such that the first button is recessed, thus not accessible by the fingers. A tamper-proof design is not only beneficial to prevent criminal acts, such as theft of the battery unit or malicious deactivation of a robot, but also against accidental disconnection of the battery which can damage the battery unit and/or the robot.

In some embodiments, the first button comprises a reset element configured to counteract an actuation of the first button and to reset it to an unactuated state. The release element provides the released state only when the first button is actuated. This embodiment is particularly advantageous in combination with the embodiment mentioned in the previous paragraph. In other words, removing the battery unit requires deliberate action and the use of the battery changing tool according to the inventive aspect. Embodiments with two buttons, wherein the activation of the released state requires the simultaneous actuation of both buttons can be beneficially combined with the above features.

A third aspect of the invention relates to a humanoid robot. As already mentioned, humanoid robots in the sense of the invention are a subtype of mobile robots which are suitable for carrying out work activities together with human workers in a shared space. In other words, such robots are highly autonomous, comprise suitable perception and data processing system to react to unforeseen events. Moreover, such robots are comparable in size to an average human. I.e., between 100 and 200 cm in height and between 30 and 120 kg, preferably about 175 cm tall and weighing about 60 kg. Preferably, the humanoid robot is configured to be operated in an upright posture, wherein a vertical extension of the robot exceeds that of its lateral extension, in particular in the upright posture its height is at least twice of its breadth and width.

The humanoid robot comprises a main body, at least two mechanically actuated legs, at least one mechanically actuated arm, and one or more battery docks. Particularly the robot might have exactly two legs and arms. Optionally the robot might also comprise a mechanically actuated head. Due to its elevated position and additional movability such head might be optimal for a placement for further sensors, particularly perception sensors such as stereo cameras.

The mechanically actuated legs are attached to a lower part of the main body and configured to provide locomotion of the robot over ground. Each of the legs is attached to the main body by a hip joint providing movement of the leg relative to the main body. Said hip joint is at least configured to provide a swiveling movement about a first hip joint axis. The first hip joint axes might be arranged to a single plane, particularly they are coaxial. The hip joint might be a joint with more than one degree of freedom, particularly the hip joint might comprise a plurality of joints each with one degree of freedom. The legs might comprise two substantially rigid links, e.g. lower and upper leg parts, and a further joint, e.g. knee joint, providing a further mobility of the links relative to each other. Locomotion within the meaning of the invention can also comprise locomotion on wheels, including locomotion on two wheels, in particular Segway-like locomotion, locomotion on rigid n-wheels, in particular as roller skates, where n>2, as well as skater locomotion, locomotion on caterpillars or locomotion with steps, including the locomotion types walking or running. The above list is non-exclusive and particularly many of the above locomotion methods might be combinable, particularly the robot might provide a tracked locomotion in a first posture and might change to walking locomotion by changing the orientation and the type of movement control of the tracks. The robot might comprise a wheel with a spur to provide a transition between wheeled and walking motion. The present invention is not limited to a specific types of robot.

The at least one mechanically actuated arm is attached to an upper part of the main body and configured to move relative to the main body. The at least one mechanically actuated arm comprises, at a distal end, a permanent end-effector or an interface for an exchangeable end-effector. The end-effector is configured to manipulate, and/or to process, and/or to measure a workpiece. End-effectors in the sense of the invention comprise, general-purpose human-like hands with three or more digits, grippers with two or more movable, particularly linearly displaceable, gripping elements, metrology elements such as laser distance meters, touch probes, or metrology grade cameras, perception elements such as cameras, touch elements such as GelSight units, or microphones, material processing elements such as drilling or welding elements. The above list is non-exclusive and the end-effector can comprise a plurality of such elements e.g., touch probe and a camera to control the pose of the touch probe. Moreover, the robot might comprise a plurality, particularly two, arms. The different arms might have different equipment.

The main body might comprise a plurality of sensing or data processing elements. Sensing elements might include internal sensors such as inertial sensors, but also measurement elements. The main body might comprise driving elements and/or the battery docks, particularly cavities.

The battery docks comprise a plurality of mating interfaces and being configured to accommodate a plurality of battery units. Battery units, in the sense of the invention, represent the main power source of the robot. The robot can comprise additional auxiliary or emergency battery units configured to provide electrical energy for specific, particularly limited operations, such as providing a beacon to locate the robot. Alternatively, auxiliary batteries might power specific components, particularly wherein the specific component is not a permanent component of the robot.

The mating interfaces are configured to cooperate with the electrical interfaces of the batteries to provide a flow of electrical energy required for the operation of the robot. To allow hot swapping, i.e. to operate the robot during the exchange of the main batteries, the robot must comprise at least two batteries and two mating interfaces. The robot might have a single battery cavity realized as a single, contiguous volume. This volume may also be divided into different separate volumes. The robot might also have a plurality of distinct battery docks. The battery units might comprise a plurality of electrical interfaces, particularly arranged in a symmetrical manner, which is reflected in the arrangement of the mating interfaces. The battery dock might comprise a lock counterelement configured to interact with the lock element of the battery unit.

The inventive robot also comprises the system according to the first or the second aspect of the invention. Particularly the robot comprises at least two swappable battery units. Each of the swappable battery units, when connected to the respective mating interface, are configured to provide electrical energy to operate the robot. In other words, the robot is capable of performing at least a limited set of operations, particularly to operate the arm to replace the battery units, when powered by a single battery unit. The robot also comprises a battery changing tool. The battery changing tool is arranged to the at least one mechanically actuated arm in the proximity of the end-effector. This arrangement is advantageous as the robot can capitalize on the full mobility provided by the arm during the battery exchange, without relying on the more delicate and therefore expensive end-effector. Proximity of the end-effector also includes cases, where the battery changing tool, particularly in the case of a magnetic holder, is part of the end-effector.

In some embodiments, the arm comprises at least three serially connected motorized rotary joints. Each of said joints is configured to provide at least one rotational degree of freedom for the end-effector. The battery changing tool is mounted with a distal portion of a wrist joint. The wrist joint is the joint which mounts the permanent end-effector or the end-effector interface. Particularly the wrist joint is the kinematically the farthest from the main body.

In some specific embodiments, the battery changing tool is mounted such that its pose is defined by a pose of the wrist joint. In case of a battery changing tool according to the second aspect of the invention the pose of the second gripper is defined by the pose of the wrist joint. In case of a battery changing tool according to the first aspect of the invention the pose of the magnetic holder is defined by the pose of the wrist joint. In other words, those elements are rigidly connected to the distal part of the joints. In particular, at least a second tool part of the battery changing tool is a permanent part of the wrist joint.

In some embodiments, the robot comprises a perception unit and a tool verification functionality. In the course of said functionality the robot is configured to (i) position battery changing tool into a field of view of the perception unit such that a relative pose of a first and a second tool parts is observable, in particular such that a resting surface and a snap head is observable, (ii) acquire an actual image with the perception unit containing the first and second tool parts, (iii) determine a state of the battery changing tool as an arrested state or a gripping state based on the actual image and a set of images. The set comprise at least one image showing the battery changing tool in the gripping state and at least one image showing the battery changing tool in the arrested state. In other words, the robot can determine the state of the battery changing tool, at least for mechanical battery changing tools, in a separate process, independently of any data provided by the tool itself. It is clear to the skilled artisan that the numbering of the steps should not be read as instruction for a sequential execution of the steps, but as a listing to improve the readability. The steps of any method or process described throughout this document might be performed in any reasonable order.

In some embodiments, the robot is configured to perform an automated battery replacement functionality. In the course of said functionality the robot is configured to (i) terminate the electrical energy flows between all electrical interfaces of a selected battery unit and corresponding mating interfaces, (ii) remove the selected battery unit from the battery dock of the robot by (a) actuating a released state of the selected battery unit, particularly by actuating a release element of the selected battery unit using the battery changing tool mounted on the robot, (b) taking the selected battery unit using the battery changing tool and pulling the released selected battery unit out of the battery dock of the robot, and (c), optionally inserting the selected battery unit into an empty battery dock of a battery charging station, (iii) insert at least one at least partially charged battery unit in the battery dock of the robot by (a) actuating a released state of the at least one at least partially charged battery unit, particularly by actuating a release element of the at least one at least partially charged battery unit using the battery changing tool, and (b) taking the at least one at least partially charged battery unit using the battery changing tool and placing the at least one at least partially charged battery unit into the battery dock of the robot such that all interfaces of the at least one at least partially charged battery unit are in electrical communication with all corresponding mating interfaces, and (iv) activate the electrical energy flow between all electrical interfaces of the inserted at least one at least partially charged battery unit and the corresponding mating interfaces.

In some specific embodiments, the mobile robot is configured to perform an energy management functionality. The energy management functionality comprises an energy reserve management functionality. In the course of which the robot is configured to (i) calculate an energy reserve threshold on the basis of a distance between a battery charging station and the robot, the energy reserve threshold relates to a required amount of electrical energy to reach the battery charging station, (ii) compare an actual energy level of the battery units with the energy reserve threshold, (iii) based on said comparing calculate an optimal route to the battery charging station and return to the battery charging station along the optimal route, (iv) switch to a battery exchange posture at the battery charging station. The battery exchange posture provides a stable posture without consumption of electrical energy and within the reach of at least one at least partially charged battery unit located in the battery charging station. The battery exchange posture might be a kneeled, full tracked or similar posture, wherein the center of mass of the robot is lowered and its footprint increased. Providing a battery exchange posture is advantageous, as it mitigates the consequences of a sudden power loss, and/or enables the battery exchange with lower energy consumption. The skilled person understands that above described steps (i)-(iii) and (iv) can be performed independently of each other.

In some specific embodiments, the energy management functionality comprises a parasite flow prevention functionality. Parasite flow in the sense of the invention is electrical energy flowing from one battery unit to another battery unit of the mobile robot. Such parasite flows on the one hand reduce the available electrical power, and in the worst case might damage the battery units or the mobile robot. The parasite flow prevention comprises (i) determining a first operating parameter, particularly an energy level or terminal voltage, of a first battery unit in electrical communication with the mobile robot, (ii) determining a second operating parameter, particularly an energy level or terminal voltage, of a second battery unit in electrical communication with the mobile robot, (iii) providing a parasite flow assessment regarding directions of the flows of electrical energy via the corresponding electrical interfaces of the first and second battery units based on the first and second operating parameters, (iv) terminating the electrical energy flow between one of the first or second battery units and the mobile robot based on the parasite flow assessment. Alternatively or additionally, the parasite flow prevention might further comprise a direct measurement of the direction and magnitude of electric flow between the battery units and the mobile robot. The parasite flow charging the battery units might be prevented based on said flow measurements.

The above-described functionalities might be realized by a computer program run by the hardware of the robot. Said computer program might be pre-provided, however can also be a result of a machine learning step. The present invention covers both of these and any potential hybrid implementation.

A fourth aspect of the invention relates to a method of changing a swappable battery unit of a mobile robot using a passive battery changing tool mounted by the robot. Passive in the sense of the invention means that said tool does not require a supply of energy, particularly electrical energy, to generate a holding force fixing the battery unit to a tool. For that the battery changing tool comprises (i) a first and a second gripper mounted in a displaceable manner, and (ii) a spring-loaded-mechanism connecting said grippers and counteracting a displacing said grippers thereby providing a gripping force, which acts as a holding force securing the battery unit to the passive battery changing tool. The battery unit comprises (i) a third holding area configured to anchor the first gripper, and (ii) a second holding area configured to be contacted by the second gripper.

The method according to the fourth aspect comprises the execution of (i) selecting a battery unit from a plurality of battery units contained in a battery dock of the robot, (ii) terminating electrical energy flows between all electrical interfaces of the selected battery unit and corresponding mating interfaces, and (iii) gripping and pulling out the selected battery unit of the battery dock of the robot using the passive battery changing tool, in particular inserting the selected battery unit into an empty battery dock of a battery charging station.

The gripping comprises the execution of (i) anchoring a first tool part of the passive battery changing tool against the third holding area of the selected battery unit, (ii) applying a separation force in excess of a force provided by spring-loaded-mechanism to increase a gap between the first and second gripper to enable a contact between the second holding area and the second gripper, (iii) moving the second gripper in contact with the second holding area, and (iv) applying a gripping force projecting from the first gripper towards the second gripper to create a gripping state by reducing the separation force below the force provided by the spring-loaded-mechanism. The separation force is provided by an external force providing mechanism, in particular a movement of a robotic component mounting the passive battery changing tool. The holding force is solely provided by the spring-loaded-mechanism.

A fifth aspect of the invention relates to a battery charging station for exchanging a swappable battery unit of a mobile robot. The mobile robot comprises a battery dock of the robot for accommodating the swappable battery unit. Said station is configured to charge the swappable battery units after said battery units have been inserted into a battery dock of the charging station, i.e. separately from the robots themselves. The battery charging station comprises a charging unit with a plurality of battery docks of the charging unit, a battery-holder-arm, a battery changing tool and a swappable battery unit according to the first or second aspect of the invention.

The battery changing tool is mounted on the battery holder arm. The battery-holder-arm comprises a set of joints and links configured to provide a movability of the battery changing tool to approach any one of the battery docks of the charging unit. The battery-holder-arm is further mounted to a base. Said base might be a static base or might comprise elements providing translational degrees of freedom to change its position within the battery charging station. The base of the battery-holder-arm might be adopted to move along a rail system.

Each battery dock of the charging unit (i) is configured to accommodate the at least one swappable battery unit, (ii) comprises a first mating interface, which is configured, when connected to a first electrical interface of the swappable battery unit, to supply electrical energy to the swappable battery unit, and (iii) an external power interface configured to draw electrical energy from an external power source, in particular a power grid, to provide the electrical energy for the operation of the battery dock. The connection to the power grid might be indirect, particularly the charging unit might comprise a power management system to control the power supply of the individual charging units. The charging unit might provide electrical energy to operate the battery-holder-arm. Alternatively, the battery-holder-arm might draw energy separately.

In some embodiments, the battery charging station comprises a preset exchange location and a guide functionality. The preset exchange location is within the reach of the battery-holder-arm. For battery-holder-arms with repositioning abilities, the reach also includes the effect of such translational degrees of freedom. The guide functionality is configured to deliver a series of control commands to guide the mobile robot to the preset exchange location. The guide functionality might be realized by providing visual instructions, particularly as printed or projected instructions. Said visual instruction might relate to machine readable commands, particularly QR-codes and barcodes, configured to cause the execution of a set of commands. The visual instructions may be implemented in the form of pictograms, e.g. an arrow representing right turn, and the mobile robot may include a corresponding interpretation module to follow such instructions. Alternatively or additionally, the guide functionality might provide the instructions by wireless communication.

In some specific embodiments, the guide functionality is configured to deliver a series of control commands to cause the robot to assume a preset orientation and stance. The preset orientation and stance might be the battery exchange posture.

In some embodiments, the battery charging station is configured to provide a battery exchange functionality. During the battery exchange functionality the battery charging station performs (i) selecting a battery unit from the at least one swappable battery unit contained in a battery dock of the charging unit, (ii) terminating electrical energy flows between all electrical interfaces of the selected battery unit and corresponding mating interfaces, and (iii) taking and pulling out the selected battery unit of the battery dock using the battery changing tool, in particular inserting the selected battery unit into an empty battery dock of the robot.

In some specific embodiments, the battery charging station further comprises an environment perception system configured to derive a relative pose of the robot with respect to the battery-holder-arm. The battery charging station is configured to initiate the battery exchange functionality based on the derived pose of the robot. By way of example, the perception system might derive a pose of the robot and initiates of the battery exchange functionality only, when the robot is arrived to the preset exchange location, and particularly has assumed the battery exchange posture. Alternatively or additionally, the perception system might derive a velocity of the robot and only initiate the battery changing functionality, when the robot is standing still for a specific duration of time, e.g. for 10 seconds or more. Additionally to such perception system the robot and the battery charging station might establish a communication and the battery exchange functionality is initiated on the basis of such data exchange.

In some specific embodiments, the battery exchange functionality comprises providing a battery stop and battery start signal to the mobile robot. The battery stop signal is configured to provide commands for terminating the electrical energy flows between all electrical interfaces of a selected battery unit and corresponding mating interfaces. The battery start signal is configured to provide commands for activating the electrical energy flow between at least one of the electrical interfaces of the selected battery unit and the corresponding mating interfaces.

A sixth aspect of the invention relates to a transport robot for transporting a swappable battery unit from a battery charging station to a mobile robot. The mobile robot comprises a battery dock of the mobile robot for accommodating the swappable battery unit. The transport robot comprises a locomotion unit, an environment perception unit, and a navigation unit. The considerations mentioned regarding the corresponding components of the humanoid robot according to the third aspect are correspondingly applicable. Providing such transport robots is particularly advantageous when a plurality of humanoid robots is utilized in large area. In such cases the specialized, thus expensive, humanoid robots must not return to the charging station for a battery exchange but can continue their work and the transport robot can perform the exchange. Such transport robot might be called in case of low charge state of the battery units of the mobile, particularly humanoid robot. Alternatively, the transport robots might perform a pre-set patrol route and visit the workstations of the mobile robots according to a regular pattern.

The transport robot also comprises a depot unit configured to contain the swappable battery unit during transportation of the swappable battery unit. The depot unit might comprises a locking counterelement configured to interact with the lock element of the battery unit to secure the battery unit to the depot unit. The transport robot comprises at least one battery according to the first or the second aspect of the invention in the depot unit. The transport robot also comprises a battery-holder-arm mounting the corresponding battery changing tool. The battery-holder-arm comprises a set of joints and links configured to provide a movability of the battery changing tool to approach the depot unit and the battery cavity of the mobile robot.

In some embodiments, the transport robot is further configured to perform a battery exchange functionality in the course of which the transport robot performs (i) selecting a battery unit from the at least one swappable battery unit contained in the depot unit, and (ii) taking and pulling out the selected battery unit of the depot unit using the battery changing tool, in particular inserting the selected battery unit into an empty battery dock of the mobile robot.

In some specific embodiments, the battery exchange functionality further provides a battery stop and battery start signal to the mobile robot. The battery stop signal is configured to provide commands for terminating the electrical energy flows between all electrical interfaces of the selected battery unit and corresponding mating interfaces. The battery start signal is configured to provide commands for activating the electrical energy flow between at least one of the electrical interfaces of the selected battery unit and the corresponding mating interfaces.

### BRIEF DESCRIPTION OF THE DRAWINGS

By way of example only, specific embodiments of the invention will be described more fully hereinafter with reference to the accompanying figures, wherein:
Figure 1 shows schematically a prior art humanoid robot;
Figure 2 shows schematically a battery unit and a corresponding battery changing tool according to the first aspect of the invention;
Figure 3a shows schematically a battery unit according to the second aspect of the invention;
Figure 3b shows schematically a battery changing tool according to the second aspect of the invention;
Figure 3c and 3d shows schematically the first and second movement paths for the first and second tool parts;
Figure 4 shows schematically, by a flowchart, the steps of an embodiment of the tool verification functionality;
Figure 5a shows schematically, by a flowchart, the steps of removing a battery from a battery cavity;
Figure 5b shows schematically, by a flowchart, the steps of inserting a battery into a battery cavity;
Figure 6 shows a battery exchange using a battery-holder-arm of a battery charging station; and
Figure 7 shows a transport robot according to the invention for transporting a swappable battery unit from a battery charging station to a mobile robot.

Unless expressly stated otherwise, the illustrations are not to scale. In particular, certain components may be shown oversized where this is deemed appropriate. In addition, some components, including essential components, may be omitted from some or all of the figures to further enhance transparency.

### SPECIFIC EMBODIMENTS OF THE INVENTION

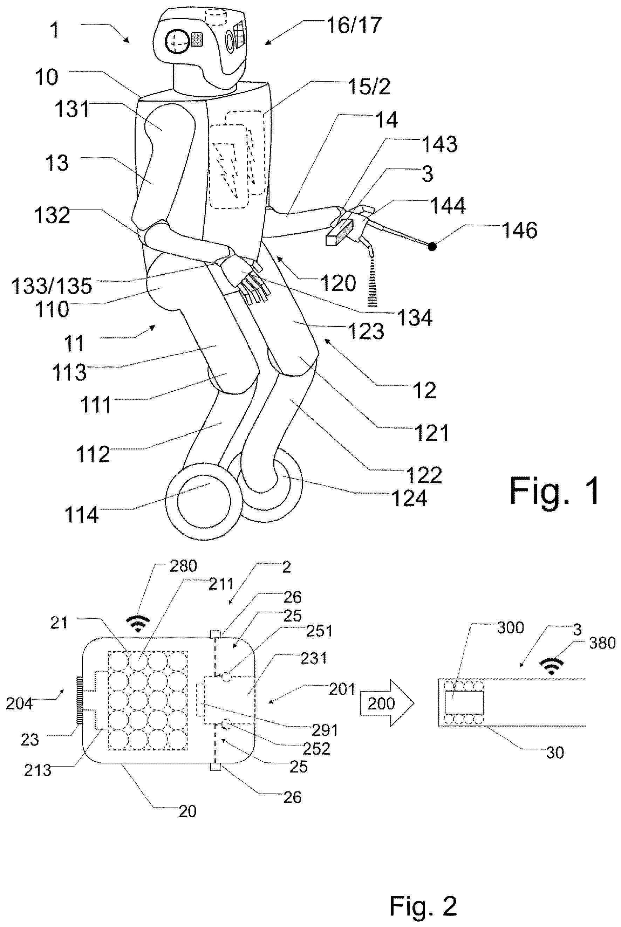

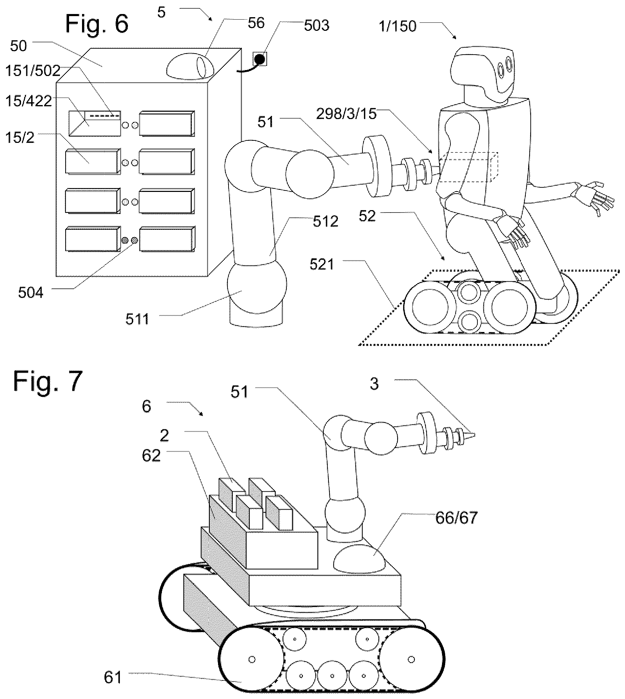

Figure 1 schematically shows a humanoid robot as an example for a more generic mobile robot 1. The robot comprises a main body 10 and two mechanically actuated legs **11,12** attached to a lower part of the main body 10. Each of the legs **11,12** is attached to the main body 10 by a hip joint **110,120** providing movement the leg **11,12** relative to the main body. The knee joints **111,121** provide a movability between the corresponding lower **112,122** and upper leg parts **113,123,** thereby enabling a stepped motion necessary e.g. for stair climbing. By way of example, the depicted robot 1 also comprises wheels **114,124** mounted to the lower leg parts **112,122.** Such wheels **114,124** enable an efficient movement on sufficiently flat terrain. Instead of wheels **114,124** other footlike element can also be used, this includes track drives or rigid or articulated feet. An embodiment of a hip **110,120** and knee joints **111,121** and the corresponding motors is disclosed in Figures 6 and 9 and the corresponding text portions of paras [0212]-[0222] and [0234]-[0241] of PCT/EP/2023/084173 which document, particularly the mentioned figures and text sections, are hereby incorporated by reference.

The depicted robot 1 comprises two mechanically actuated arms **13,14** attached to an upper part of the main body 10. The arms **13,14** are configured to move relative to the main body 10. The depicted left arm 14 comprises, at a distal end, a metrology sensor package as permanent end-effector 144. The depicted right arm 13 comprises, at a distal end, an interface 135 for an exchangeable end-effector, depicted as a general-purpose robotic hand 134. The depicted arms **13,14** comprise at least three serially connected motorized rotary joints **131-133** (only the right arm 13 is shown in detail) each configured to provide at least one rotational degree of freedom for the end-effector **134,144.** The teaching with respect to the hip **110,120** and knee joints **111,121** are correspondingly applicable to the joints **131-133,143** of the arms **13,14.** The end-effectors **134,144** are configured to manipulate, and/or process, and/or measure a workpiece. In the depicted example the metrology package 144, can measure a workpiece, e.g. with the depicted touch probe 146, while the general-purpose hand 134 enables a grabbing of a workpiece or a tool.

The depicted robot **1** comprises two battery cavities **15** with corresponding swappable battery units **2.** In the depicted embodiment the battery cavities **15** are located in the main body **10.** Other arrangement of the battery cavities **15** is also possible, they might be formed inside the legs **13,14.** Furthermore a robot **1** according to the invention might comprise, alternatively or additionally, external battery docks. The robot **1** also comprises battery a changing tool **3** arranged to the left arm **14** in the proximity of the end-effector **144.** The battery cavities **15** and battery unit **2** comprise the necessary energy storage elements and interfaces to enable the robot **1** to draw electrical energy from the battery units **2** to perform its actions. The battery units **2** and the battery changing tool **3** comprises the necessary elements enabling the battery changing tool **3** to take, hold against the gravity and transfer battery unit **2.** These elements are not shown in this high level illustration, but will be discussed in more detail in the subsequent figures.

The depicted robot **1** comprises a perception unit **16** comprising one or more sensors such as cameras, including wide angle cameras, stereo cameras, true angle cameras, radars, lidars, infrared sensors, microphones and similar elements as well as the corresponding computing resources to derive perception data regarding at least a part of the environment of the robot **1,** preferably an essentially complete scene understanding regarding the environment of the robot **1.** The depicted robot also comprises a navigation unit **17** configured to derive data for autonomous propelling in the environment. The navigation unit **17** might derive data from external signals, such as global navigation satellite signals, wireless local area network signals, and/or using the perception data provided by the perception unit **16.** The present invention can be applied in combination with any reasonable perception and navigation data. The perception unit **16** can obtain data regarding a state of the battery changing tool **3.**

The skilled person understands that the robot **1** shown in Figure 1 represents an illustration of a potential design of humanoid robot **1,** even though many alternative designs are suitable for applying the claimed invention. Moreover, many of the depicted elements are optional for the application of the claimed invention and might be omitted in alternative embodiments.

Figure 2 schematically shows a battery changing tool **3** according to the first aspect of the invention from the top view. The tool **3** comprises magnetic holder **30** with an electromagnet **300**. An interaction between the magnetic holder **30** and a holding counterelement **291** generates a holding force securing the battery unit **2** to the battery changing tool **3.** The electromagnet **300** and the holding counterelement **291** might be dimensioned such that the interaction between the two is sufficient to firmly hold the battery unit **2** against the gravity in any orientation of the tool **3.**

Figure 2 also schematically shows a battery unit **2** according to the first aspect of the invention from the top view such that the pulling direction **200** pointing to the left. The battery unit **2** comprises an external housing **20**. While the illustration is not true to scale, the skilled person understands that in order to function as the main power source of a robot the battery unit **2** has to be of considerable size. By way of example the battery unit **2** might have a rectangular cuboid envelope with edge length in the range of 50-300 mm. The battery unit **2** comprises a first energy storage unit **21,** which in the depicted embodiment containing a plurality of cylindrical cells **211.** The skilled person understands that alternative geometries can be used without any significant burden. By way of example, a first energy storage unit according to the invention might be configured to store 200 Wh electrical energy or more. The battery unit **2** also comprises a first electrical interface **23** in wired contact **213** with the first energy storage unit **21.** The first electrical interface **23** is arranged to the fourth surface **204** of the battery unit **2.** The depicted first electrical interface **23** is a multipole connector, however another types of connections are also possible. By way of example, the first energy storage unit **21** and the first electrical interface **23,** as well as the corresponding wiring **213,** might be configured to provide a DC, with 48 V and a maximal current of 100 A.

The battery unit **2** comprises a lock element **26** configured to provide a locked state preventing the removal of the inserted battery unit and a released state enabling the removal of the inserted battery unit **2.** Depicted lock element **26** is a pin projecting outwards from the housing **20**. By interacting with a corresponding counterelement in the battery cavity, e.g. notch or bar element, the pin **26** can prevent the removal of the battery unit **2** from the battery cavity. The pin **26** can be retracted by an actuation of a release **element 25** thereby providing the released state. The release element **25** comprises a first button **251** and the actuation of the first button **251** provides the released state of the pin **26.** In the depicted embodiment the release element **25** also comprises an optional second button **252** functionally and structurally equivalent to the first button **251.** The released state is only provided when both buttons **251,252** are simultaneously actuated. Alternatives of the depicted mechanical release elements **25** are known to the skilled person. Particularly the lock element **26** might be electromagnetically actuated.

The battery unit **2** comprises a recess **231** projecting inwards from a first surface **201,** in the pulling direction **200**. The recess **231** is configured to accommodate a magnetic holder **30**, particularly they fit tightly with each other. A holding counterelement **291,** i.e. a mild steel plate, is mounted at a distal plane of the recess **231.** The distal plane is the plane the furthest from the first surface **201.** An interaction between the magnetic holder **30** and the holding counterelement **291** generates a holding force securing the battery unit **2** to the battery changing tool **3.** The tool **3** is configured to actuate the first button **251,** when inserted into the recess **231.** Depicted first button **251** is arranged to the sidewalls or jacket of the recess **231** and realized as a plurality of balls configured to at least partially escape into the sidewall when mechanically actuated. The advantage of the depicted embodiment is that a contact force arising between the magnetic holder **30** and the buttons **251,252** hinders the rotation of the battery unit **2** about the magnetic holder **30** due to the resulting friction forces. As a drawback the mechanical contact between the magnetic holder **30** and the buttons **251,252,** particularly the friction during the insertion of the magnetic holder **30** into the recess **231** might cause increased wear and tear for the magnetic holder **30**. Alternative embodiments, where the first button **251** might be arranged into the distal plane of the recess **231** are also possible. Actuating the released state without a button **251** is also possible within the meaning of the invention.

The depicted tool **3** and battery unit **2** further comprise respective communication elements **280,380** as radio communication elements, particularly as near field communication elements. The communication elements **280,380** are configured to establish a data exchange between the tool **3** and the battery unit **2** to provide battery data to the tool **3.** The battery data might comprise battery identifier, compatibility data, and charge state data.

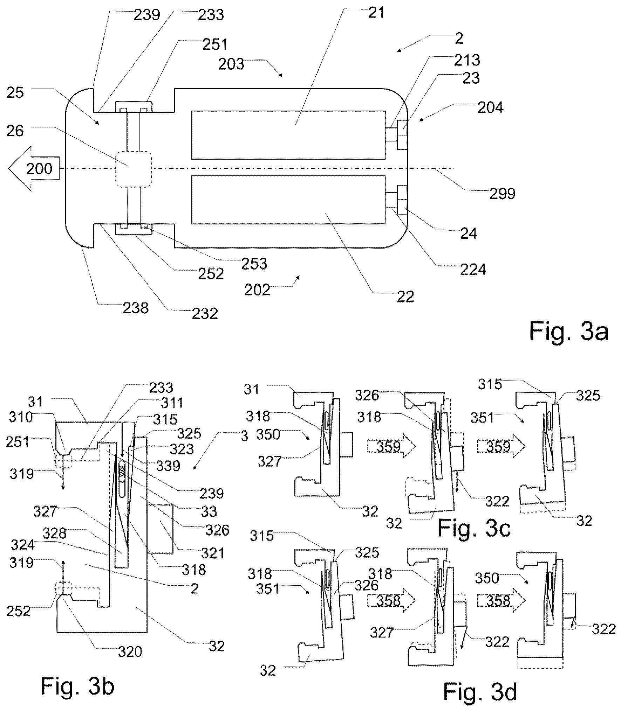

Figure 3a schematically shows an exemplary embodiment of a swappable battery unit **2** according the second aspect of the invention in cross sectional view. The depicted battery unit **2** is a mirror symmetrical to a central plane **299**. I.e. the battery unit comprises a first **21** and second energy storage units **22** in wired electrical communication **213,224** with the respective first and second electrical interfaces **23,24** arranged to the fourth surface **204** symmetrically to said central plane **229.** Such embodiments are advantageous, particularly when the battery exchange requires a change of the orientation of the battery unit **2,** nevertheless the related features do not belong to the core features of the invention.

The battery unit **2** also comprises a lock element **26** and a release element **25** similarly to the battery unit depicted in Figure 2. The considerations are correspondingly applicable to the embodiment of Figure 3a. The release element comprises a first **251** and second buttons **252** arranged to the opposing third **203** and second surfaces **202**. The first **251** and second buttons **252** comprise corresponding reset element **253,** e.g. small spiral spring, configured to counteract an actuation of the buttons **251,252** and to reset them to unactuated states. The released state of the release element **25** is only provided when both buttons **251,252** are simultaneously actuated. Said reset element **253** thus at least hinders, preferably prevents, an accidental disconnection of the battery unit **2.** Some features are optional and might be omitted for other embodiments of the battery unit **2** according to the second aspect of the invention.

The battery unit **2** comprises a third holding area **233** formed about the first button **251,** while a second holding area **232** formed about the second button **252.** The third holding area **233** is located inwardly with respect to a first wall section **239** extending orthogonally to a pulling direction **200** and projecting above the third holding area **233.** The second holding area **232** is located inwardly with respect to a second wall section **238** extending orthogonally to the pulling direction **200** and projecting above the second holding area **232.** These wall sections **238,239** might act as anchoring counterparts for a battery changing tool, moreover a contact force between the battery changing tool and the wall sections **238,239** might provide a significant part of the holding force.

Figure 3b schematically shows an exemplary embodiment of a battery changing tool **3** according to the second aspect of the invention. The depicted tool **3** is in a gripping state in which it exerts a gripping force **319** acting as a holding force which secures a battery unit **2,** depicted with dashed lines, to the tool **3.** The grippers **310,320** are configured to actuate the first **251** and the second buttons **252** thereby providing a released state of the battery unit **2.** The tool **3** comprises a first tool part **31** with a first gripper **310,** a second tool part **32** with a second gripper **320**, and a constraining element **33,** depicted as a spiral spring. The constraining element **33** is configured to provide a restoring force **339** acting against a separation of the first **31** and the second tool parts **32,** thereby provides a movable interconnection between the two tool parts **31,32.**

The second tool part **32** comprises an actuating portion **321** configured to receive an external force (not shown). The first gripper **310** comprises an anchoring member **311** configured for anchoring the first gripper **310** against the third holding area **233,** in the depicted embodiment also against the first wall section **239,** of the battery unit **2.** When the first gripper **310** is anchored, a separation force acting on the second tool part **32** in excess of the restoring force **339** causes an increase in the distance between the first **31** and second tool parts **32.**

The depicted second tool **32** part comprises (i) a first portion **327** with a flat section **324** to be positioned against the battery unit **2** during the gripping, (ii) a second portion **326** with a resting surface **325,** and (iii) a tool cavity **328** between the first **327** and second portions **326** with an opening and a tapered portion **323** adjoining the opening. The second gripper **320** is projecting from the first portion **327** and extending beyond a plane defined by the flat section **324.**

The depicted first tool part **31** comprises (i) a stem **318** dimensioned to fit into the tapered portion **323** in a movable manner such that the stem **318** is tilted towards the first portion **327** in the gripping state and tilted towards the second portion **326** in the arrested state, and (ii) a snap head **315,** as mechanical blocking element **315,** configured to provide the arrested state via an interaction with the resting surface **325.** The first gripper **310** is projecting from the stem **318** and extending beyond the plane defined by the flat section **324.**

Figure 3c schematically shows some steps of performing a first movement path **359** for a relative movement of the first **31** and second tool parts **32** to translate from a gripping state **350** to an arrested state **351** of the tool. First the tool is located in the in the gripping state **350**, i.e. the first **31** and second tool parts **32** exert a force owing to the restoring force provided by the constraining element (not shown in the panels). The stem **318** is tilted towards the first portion **327** of the second tool part **32.** Subsequently a separation force **322** is applied to the second tool part **32** in a manner which causes the stem **318** to tilt towards second portion **326** of the second tool part **32.** For this embodiment this can be achieved by a separation force **322** acting in the depicted downward direction. The skilled person understands that the separation force **322** must exceed the restoring force to provide said effect. The skilled person also understands that only the relative pose of the first **31** and second tool parts **32** is of importance for the effect, thus whether the stem **318** or the second tool part **32** tilts bears no importance. By releasing the separation force **322** the constraining element pulls the second tool part **32** to the first tool part **31** such that snap head **315** contact the resting surface **325** and thereby provide the arrested state **351.**

Figure 3d schematically shows some steps of performing a second movement path **358** for a relative movement of the first **31** and second tool parts **32** to translate from an arrested state **351** to a gripping state **351** of the tool. First the tool is located in the in the arrested state **351,** i.e. the snap head **315** is in contact with the resting surface **325,** while the stem **318** is tilted towards the second portion **326** of the second tool part **32.** Subsequently a separation force **322** is applied to the second tool part **32** in a manner which causes the stem **318** to tilt towards first portion **327** of the second tool part **32.** This can be achieved by applying a separation force **322** which exert a torque on the second tool part **32,** e.g. similarly to the depicted manner. By reducing the separation force **322** below that of the restoring force, but not to zero, the constraining element pulls the second tool part **32** to the first tool part **31** such that snap head **315** avoids contacting the resting surface **325** and thereby the gripping state **350** is provided.

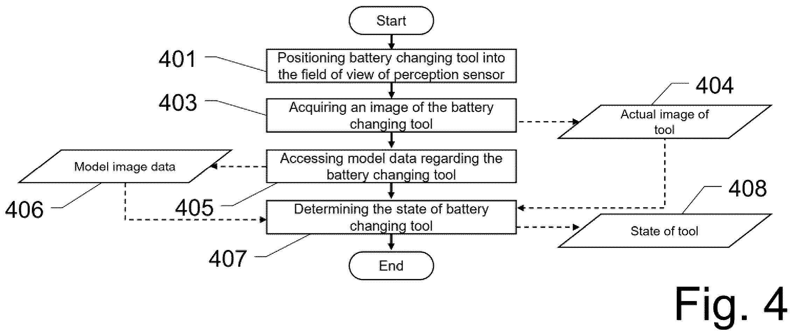

Figure 4 shows by a schematic flowchart some key steps performed within the context of a tool verification functionality. Command/flow-lines show as bold and data-lines as dashed arrows. The depicted flowcharts focus on the features of the claimed invention and the actual embodiments comprise further, non-depicted elements, in particular command or data elements and/or data transfer lines. Moreover, command or data modules might be depicted in a simplified form due to reasons of clarity and conciseness. The sequence of steps shown in the flow diagrams is only exemplary; reasonable variations of the sequence and/or parallel execution of the steps are possible within the meaning of the invention.

In the first step the robot positions **401** of the battery changing tool into a field of view of the perception unit such that a relative pose of a first and a second tool parts is observable. The skilled person understands that this step might include feedback loops to ensure that the tool is positioned as expected. Such methods are known to the skilled person and thus the details are omitted for reasons of conciseness and transparency.

When the tool is positioned an image **404** is acquired **403** with the perception unit of the robot. The image shows the relative pose of a first and a second tool parts. Particularly for battery changing tools having such elements, the image data might show the relative pose of the resting surface with respect to the snap head. A model image data **406** is also accessed **405,** said model image data **406** might consist of a set of images regarding actual real world battery changing tools in different states. Alternatively or additionally, the model image data **406** might comprise images generated by machine learning or generative artificial intelligence. Irrespective of its origin the model image data comprises at least one image showing the battery changing tool in the gripping state and at least one image showing the battery changing tool in the arrested state. Finally, a state **408** of the battery changing tool is determined **407** as an arrested state or a gripping state based on the actual image **404** and the model image data **406**.

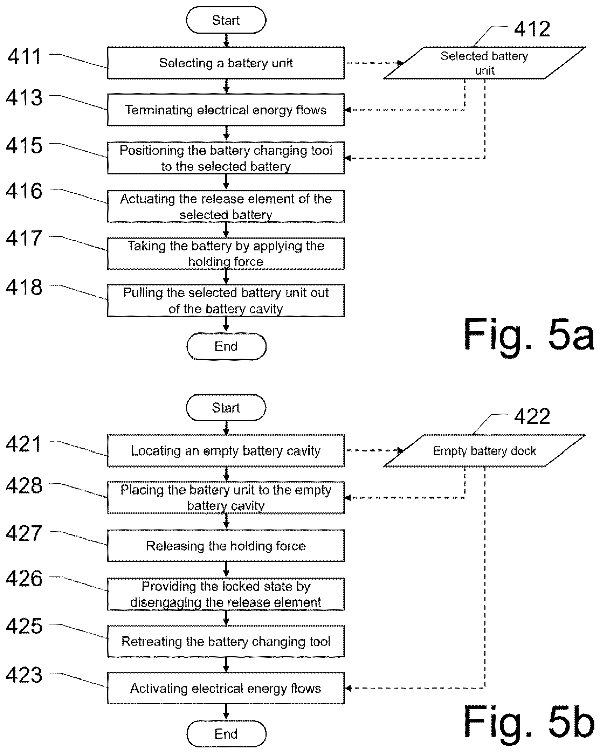

Figure 5a and 5b shows by a flowchart, the key step the removing and the inserting a selected battery unit **412** from/into a battery dock. In this high-level interpretation the steps are substantially identical irrespective of whether the battery changing tool is located on the mobile robot, the battery-holder-arm of a battery charging station or a transport robot. Moreover, the character of the steps is also unchanged, whether the respective battery dock is in the mobile robot, the transport robot or the charging unit. Thus, the disclosed procedure is applicable to each of the above combinations with corresponding adaptation. The skilled person can make these customizations based on the entire disclosure of this document and common general knowledge.

In the first step a battery unit **412** is selected **411** from among the battery units located in the one or more battery docks. In case the battery dock belongs to another entity, e.g. the mobile robot selecting a battery unit located in the battery dock of the charging unit, corresponding data exchange might be performed before and/or after the selection. Particularly the battery unit **412** and the battery changing tool might comprise the required communication units, more particularly such communication units might be realized as near-field communication units. Such data exchanges are considered to be comprised by the steps shown on the figure. In the next step the electrical energy flows between all electrical interfaces of the selected battery unit **412** and the corresponding mating interfaces in the battery dock are terminated **413.** Again, this step might be realized by communicating a request of terminating **413** the electrical energy flows (battery stop signal). Upon successful termination of the electrical energy flows a confirmation is provided.

When the electrical energy flows are terminated, thus the risk of arc formation is minimized, the selected battery unit **412** can be removed out of the battery dock. The steps to perform the removal are positioning **415** of the battery changing tool to the selected battery unit **415,** actuating **416** the release element, taking **417** the battery by applying a holding force and pulling out **418** the selected battery unit **412.** The skilled person understands that the actuating **416** of the release element can be performed as a part of the positioning **415** of the battery changing tool. The holding force might be at least partially provided by a magnetic force for a battery changing tool according to the first aspect or by a mechanical gripping force for a battery changing tool according to the second aspect.

The insertion of the battery unit into an empty battery dock **422** comprises the steps, essentially in reverse order. For the here depicted flowchart it is assumed that the swappable battery unit is secured to the battery changing tool and the necessary transfer step (orientation and position changes) have already been performed.

First an empty battery dock **422** is located **421,** i.e. identified and its pose with respect to the battery changing tool is determined. The battery changing tool is then positioned to place **428** the secured battery unit into the empty battery dock **422** such that all interfaces of the battery unit are positioned to enable electrical communication with all corresponding mating interfaces. Thereafter the holding force is released **427** and the locked state of the battery unit is provided by disengaging the release element **426,** after which the battery changing tool is retreated **425.** Alternatively, the provision of the locked state might require further action such as deliberate actuation of the locking element, the skilled person can perform such adjustments on the basis of the state of the art. Finally, the electrical energy flow between all electrical interfaces of the inserted battery unit and the corresponding mating interfaces in the battery dock **422** are activated. Such activation **423** might be performed by providing a battery start signal.

Figure 6 shows an exemplary embodiment of a battery charging station **5** according to a fifth aspect of the invention. The depicted battery charging station **5** comprises a charging unit **50** with a plurality of battery cavities **15.** In the depicted example each cavity **15** is configured to accommodate one swappable battery unit **2.** Alternative embodiments wherein the cavities **15** are configured to accommodate a plurality of battery units **2** is also possible within the meaning of the invention. One of said battery cavities **15** is empty **422.** Each battery cavity **15** of the charging unit **50** comprises a mating interface **151** which when connected to the electrical interface of the swappable battery unit **2** supplies electrical energy to the swappable battery unit **2.** The battery cavity **15** of the charging unit **50** also comprises an external power interface **502** configured to draw electrical energy from an external power source **503**, i.e. from a power grid. In the depicted embodiment the external power interface **502** draw power indirectly, e.g. via a power management system of the charging unit **50**. In the depicted embodiment an optional charge state indicator **504** is associated with each of the battery cavities **15** of the charging unit **50**. Said charge state indicator enables a determination of the charge state of the battery unit **2** located in the battery cavity **15,** thereby aiding an optimal selection of a replacement battery.

The battery changing station also comprises a battery-holder-arm **51** mounting a battery changing tool **3** according to the first or second aspect of the invention. In the depicted embodiment an at least partially charged battery unit **298** is secured to the battery changing tool **3.** The battery-holder-arm is inserting said battery unit **298** into a battery cavity **15** of a mobile robot **1** arrived to battery charging station **5.** The depicted mobile robot **1** lacks the battery changing tool **3,** thus it is limited in performing a battery exchange, particularly prevented from doing that. In the embodiment shown, the battery compartments **15** of the charging unit **50** and the mobile robot **1** are essentially identical, hence they are provided with identical reference signs. This is not necessary for the application of the inventive aspects as long as the battery cavities **15** are compatible with the battery units. The skilled person can apply the necessary modifications required for the latter case based on common general knowledge. The battery-holder-arm **51** comprises a set of joints **511** and links **512** configured to provide a movability of the battery changing tool **3** to approach any one of the battery cavities **15** of the charging unit **50**, in particular the battery cavities **15** of the mobile robot **1.**

The battery charging station **5** also comprises a preset exchange location **52,** marked by an indicator **521** as visual instruction. The mobile robot **1** followed said instructions and assumed a battery exchange posture **150** in the preset exchange location **52.** Said battery exchange posture **150** provides a stable posture without consumption of electrical energy, in the depicted embodiment the mobile robot **1** descended into a full tracked or, kneeling posture with a large footprint. The battery charging station **5** also comprises an environment perception system **56** configured to derive a relative pose of the mobile robot **1** with respect to the battery-holder-arm **51.**

The depicted battery charging station **6** configured to initiate the battery exchange functionality based on the derived pose of the mobile robot, i.e. whether the robot **1** is located at the preset exchange location **52.**

Figure 7 shows an exemplary embodiment of transport robot **6** according to the sixth aspect of the invention. The depicted robot is configured to perform an autonomous navigation **67** on the basis of the image data provided by the environment perception unit **66.** Alternative embodiments, wherein said navigation is performed on the basis of external navigation signals are also possible. Particularly the transport robot **6** might be navigated remotely. The depicted locomotion unit **61** is a track drive, however any suitable locomotion unit **61** can be applied, which includes flying transport robots **6.**

The transport robot **6** comprises a depot unit **62** configured for storing the swappable battery units **2** during transportation. The transport robot **6** also comprises a battery-holder-arm **51** mounting a battery changing tool **3.** The battery changing tool **3** is configured take hold against the gravity and transfer the battery unit from the depot unit **62** to a battery cavity of a mobile robot and vice versa. The battery-holder-arm **51** comprises a set of joints and links configured to provide a movability of the battery changing tool **3** to approach the depot unit **62** and the battery cavity of the mobile robot.

Although the invention is illustrated above, partly with reference to some specific embodiments, it must be understood that numerous modifications and combinations of different features of the embodiments can be made. All of these modifications lie within the scope of the appended claims.

## Claims

1. Battery system for a mobile robot (1), wherein the system comprises
- at least one swappable battery unit (2) configured to
o be insertable into a battery dock (15) of the robot (1), and
o provide electrical energy for operating the robot (1),
- a battery changing tool (3) configured to take (417), hold against the gravity, and transfer said battery unit (2) during
o an insertion (428) of the battery unit (2) into the battery dock (15) of the robot (1) or a charging unit (50), and
o a removal (418) of the battery unit (2) from the battery dock (15) of the robot (1) or the charging unit (50),
wherein the battery unit (2) comprises
- a first energy storage unit (21) configured to store electrical energy,
- a first electrical interface (23) in electrical communication (213) with the first energy storage unit (21) thereby enabling a flow of electrical energy from or to the first energy storage unit (21),
- a lock element (26) configured to provide a locked state preventing the removal of the inserted battery unit and a released state enabling the removal of the inserted battery unit,
**characterized in that**
- the battery unit (2) comprises a first holding area (231), said first holding area (231)
o being embodied as a recess (231) projecting inwards from a first surface (201) in the pulling direction (200), and
o associated with a holding counterelement (291) comprising or being made of a ferromagnetic material,
- the tool (3) comprises a magnetic holder (30), the magnetic holder (30)
o being dimensioned to cooperate with the recess (231), particularly to fit tightly into said recess (231), and
o comprising or embodied as an electromagnet (300), such that an interaction between the magnetic holder (30) and the holding counterelement (291) generates a holding force securing the battery unit (2) to the battery changing tool (3).

2. The system according to claim 1, wherein
- the electromagnet (300) and the holding counterelement (291) are dimensioned such that the interaction between the two is sufficient to firmly hold the battery unit (2) against the gravity in any orientation of the tool (3), and/or
- the recess (231) is configured to provide a form-lock preventing a rotation of the battery unit (2) about the magnetic holder (30),
in particular wherein the recess (231) has
- a polygonal, particularly triangular, quadratic or hexagonal cross section when viewed from the pulling direction (200),
- a concave shaped cross section when viewed from the pulling direction (200), particularly comprising a bar and/or a groove, or
- a sector shaped cross section when viewed from the pulling direction (200), particularly a semicircular cross section.

3. The system according to any one of the preceding claims, wherein the battery unit (2) comprises a release element (25) with a first button (251), wherein
- the release element (25) provides the released state when the first button (251) is actuated,
- the first button (251) extends into the recess (231) when not actuated.

4. Battery system for a mobile robot (1), wherein the system comprises
- at least one swappable battery unit (2) configured to
o be insertable into a battery dock (15) of the robot (1), and
o provide electrical energy for operating the robot (1),
- a battery changing tool (3) configured to take (417), hold against the gravity, and transfer said battery unit (2) during
o an insertion (428) of the battery unit (2) into the battery dock (15) of the robot (1) or a charging unit (50), and
o a removal (418) of the battery unit (2) from the battery dock (15) of the robot (1) or the charging unit (50),
wherein the battery unit (2) comprises
- a first energy storage unit (21) configured to store electrical energy,
- a first electrical interface (23) in electrical communication (213) with the first energy storage unit (21) thereby enabling a flow of electrical energy from or to the first energy storage unit (21),
- a lock element (26) configured to provide a locked state preventing the removal of the inserted battery unit and a released state enabling the removal of the inserted battery unit, and
- a release element (25) configured to actuate the released state by a mechanical interaction between the lock (26) and release elements (25), wherein the release element (25) comprises a first button (251) arranged to a third surface (203) of the battery unit (2), wherein the release element (25) provides the released state when the first button (251) is actuated,
**characterized in that**
- the battery unit (2) comprises a third holding area (233)
∘ being formed about the first button (251), and
o being located inwardly with respect to a first wall section (239) extending orthogonally to a pulling direction (200) and projecting above the third holding area (233),
- the battery unit (2) comprises a second holding area (232)
o being formed at a second surface (202) of the housing, the second surface (202) being opposite to the third surface (203), and
∘ being located inwardly with respect to a second wall section (238) extending orthogonally to the pulling direction (200) and projecting above the second holding area (232),
- the tool (3) comprises a first tool part (31) with a first gripper (310), a second tool part (32) with a second gripper (320), and a constraining element (33),
- the tool (3) is configured to provide a gripping state (350), in which the first gripper (310) exerts a gripping force (319) acting in a direction towards the second gripper (320), the gripping force (319) acting as a holding force securing the battery unit (2) to the battery changing tool (3),
- the first (31) and second tool parts (32) are movably interconnected by the constraining element (33),
- the constraining element (33) is configured to provide a restoring force (339) acting against a separation of the first (31) and the second tool parts (32),
- the first gripper (310) comprises an anchoring member (311) configured for anchoring the first gripper (310) against the third holding area (233) such that, when the first gripper (310) is anchored, a separation force (322) acting on the second tool part (32) in excess of the restoring force (339) causes an increase in the distance between the first (31) and second tool parts (32), and
- the second tool part (32) comprises an actuating portion (321) configured to receive an external force providing the separation force (322).

5. The system according to claim 4, wherein a mechanical blocking element (315) is arranged on the first tool part (31), and the tool is configured to
- provide an arrested state (351) by the mechanical blocking element (315), wherein a relative pose of the first (31) and second tool parts (32) is fixed in the arrested state (351), and
- translate from the arrested state (351) to the gripping state (350) under the influence of the external force providing the separation force (322),
in particular wherein the tool (3) provides
- a first movement path (359) for a relative movement of the first (31) and second tool parts (32), wherein an interaction between the second tool part (32) and the mechanical blocking element (315) is ensured, and
- a second movement path (358) for a relative movement of the first (31) and second tool parts (32), wherein the interaction between the second tool part (32) and the mechanical blocking element (315) is avoided.

6. The system according to claim 5, wherein
- the constraining element (33) is embodied as a tension spring,
- the second tool part (32) comprises
o a first portion (327) comprising a flat section (324) to be positioned against the battery unit (2) during the gripping (417),
o a second portion (326) comprising a resting surface (325), and
o a tool cavity (328) between the first (327) and second portions (326), the tool cavity (328) comprising an opening and a tapered portion (323) adjoining the opening,
- the second gripper (320) is projecting from the first portion (327) and extending beyond a plane defined by the flat section (324),
- the first tool part (31) comprises
o a stem (318) dimensioned to fit into the tapered portion (323) in a movable manner, wherein the stem (318) is tilted towards the first portion (327) in the gripping state (350) and tilted towards the second portion (326) in the arrested state (351), and
o a snap head (315), as the mechanical blocking element (315), the snap head (315) being configured to provide the arrested state (351) via an interaction with the resting surface (325),
- the first gripper (310) is projecting from the stem (318) and extending beyond the plane defined by the flat section (324).

7. The system according to any one of claims 4 to 6, wherein the actuating portion (321) is embodied
- as a tool interface (321) being configured to interact with a corresponding tool counter-interface located in the robot (1), particularly in an arm (13,14) of the robot (1), in particular wherein the tool interface (321) is located on the second tool part (32), or
- as a shaft enabling the tool (3) to be held by an end-effector (134,144) of the robot (1),
in particular wherein
- the release element (25) comprises a second button (252) arranged within the second holding area (232), the second button (252) is aligned to the first button (251), and
- the actuation (416) of the release element (25) involves a simultaneous actuation of the first (251) and second buttons (252).

8. The system according to any one of the preceding claims, wherein the tool (3) and the battery unit (2) further comprise respective communication elements (280,380), the communication elements (280,380) being configured to establish a data exchange between the tool (3) and the battery unit (2) to provide battery data to the tool (3),
in particular wherein
- the communication elements (280,380) are embodied as wireless communication elements, more particularly near field communication elements, and/or
- the battery data comprise battery identifier, compatibility data, and charge state data, and/or
- the communication element (380) of the tool (3) is further configured to share battery data with the robot (1).

9. The system according to any one of the preceding claims, wherein the first electrical interface (23) is assigned to a fourth surface (204) of the battery unit (2), wherein the fourth surface (204) is the surface which is furthest away from the holding areas (231-233) along the pulling direction (200),
in particular wherein the battery unit (2) further comprises
- a second energy storage unit (22) configured to store electrical energy, and
- a second electrical interface (24) assigned to the fourth surface (204) and being in electrical communication (224) with the second energy storage unit (22) thereby enabling a flow of electrical energy from or to the second energy storage unit (22),
wherein
- the first (23) and second electrical interfaces (24) are functionally equivalent,
- the first (21) and second energy storage units (22) are functionally equivalent, and
- the battery unit (2) is mirror-symmetrical with respect to an arrangement of the first (23) and second electrical interfaces (24).

10. The system according to any one of the preceding claims, wherein
- the holding areas (231-233) are designed in such a way that the actuation of the released state, particularly an actuation (416) of the release element (25), by a human hand is hindered, in particular prevented, and/or
- the first button (251) comprises a reset element (253) configured to counteract an actuation of the first button (251) and to reset it to an unactuated state, and wherein the release element (25) provides the released state only when the first button (251) is actuated.

11. Humanoid robot (1), comprising
- a main body (10),
- at least two mechanically actuated legs (11,12) attached to a lower part of the main body (10) and configured to provide locomotion of the robot (1) over ground, wherein each of the legs (11,12) is attached to the main body (10) by a hip joint (110,120) providing movement of the leg (11,12) relative to the main body (10),
- at least one mechanically actuated arm (13,14) attached to an upper part of the main body (10) and configured to move relative to the main body (10), wherein the at least one mechanically actuated arm (13,14) comprises, at a distal end, a permanent end-effector (144) or an interface (135) for an exchangeable end-effector (134), wherein the end-effector (134,144) is configured to manipulate, and/or to process, and/or to measure a workpiece, and
- one or more battery docks (15) of the robot (1) comprising a plurality of mating interfaces (151) and being configured to accommodate a plurality of battery units (2),
**characterized in that**
the robot (1) further comprises a system according to any one of claims 1 to 10, with
- at least two swappable battery units (2), wherein each of the swappable battery units (2), when connected to the respective mating interface (151), are configured to provide electrical energy to operate the robot (1), and
- a battery changing tool (3) being arranged to the at least one mechanically actuated arm (13,14) in the proximity of the end-effector (134,144).

12. The robot (1) according to claim 11, wherein
- the arm (13,14) comprises at least three serially connected motorized rotary joints (131-133,143) each configured to provide at least one rotational degree of freedom for the end-effector (134,144), and
- the battery changing tool (3) is mounted with a distal portion of a wrist joint (133,143), wherein the wrist joint (133,143) mounts the permanent end-effector (144) or the end-effector interface (135),
in particular wherein the battery changing tool (3) is mounted such that a pose of a second gripper (320) of the battery changing tool (3), and/or a pose of a magnetic holder (30) of the battery changing tool (3) is defined by a pose of the wrist joint (133,143),
more particularly wherein at least a second tool part (32) of the battery changing tool (3) is a permanent part of the wrist joint (133,143).

13. The robot (1) according to any one of claims 11 to 12, wherein the robot (1) comprises a perception unit (16) and a tool verification functionality, in the course of said functionality the robot (1) being configured to
- position (401) the battery changing tool (3) into a field of view of the perception unit (16) such that a relative pose of a first (31) and a second tool parts (32) is observable, in particular such that a resting surface (325) and a snap head (315) is observable,
- acquire (403) an actual image (404) with the perception unit (16) containing the first (31) and second tool parts (32), and
- determine (407) a state (408) of the battery changing tool (3) as an arrested state (351) or a gripping state (350) based on the actual image (404) and a set of images (406), the set comprising at least one image showing the battery changing tool (3) in the gripping state (350) and at least one image showing the battery changing tool (3) in the arrested state (351).

14. The robot (1) according to any one of claims 11 to 13, wherein the robot (1) comprises an automated battery replacement functionality in the course of which the robot (1) remains powered and supplied with electrical energy from one of the at least two swappable battery units in the battery dock (15) of the robot (1) and is configured to
- terminate (413) the electrical energy flows between all electrical interfaces (23,24) of a selected battery unit (412) and corresponding mating interfaces (151),
- remove the selected battery unit (412) from the battery dock (15) of the robot (1) by
o actuating a released state of the lock element (26) of the selected battery unit (412), particularly by actuating (416) a release element (25) of the selected battery unit (412) using the battery changing tool (3) mounted on the robot (1), and
∘ taking (417) the selected battery unit (412) using the battery changing tool (3) and pulling (418) the released selected battery unit (412) out of the battery dock (15) of the robot (1), in particular inserting the selected battery unit (412) into an empty battery dock (422) of a battery charging station (5),
- insert at least one at least partially charged battery unit (298) in the battery dock (15) of the robot (1) by
o actuating a released state of the at least one at least partially charged battery unit, in particular by actuating (416) a release element (25) of the at least one at least partially charged battery unit (298) using the battery changing tool (3), and
∘ taking (417) the at least one at least partially charged battery unit (298) using the battery changing tool (3) and placing (428) the at least one at least partially charged battery unit (298) into the battery dock (15) of the robot (1) such that all interfaces of the at least one at least partially charged battery unit (298) are in electrical communication with all corresponding mating interfaces (151),
- activate (423) the electrical energy flow between all electrical interfaces (23,24) of the inserted at least one at least partially charged battery unit (298) and the corresponding mating interfaces (151),
in particular wherein the mobile robot (1) is configured to perform an energy management functionality comprises an energy reserve management functionality in the course of which the robot is (1) is configured to
- calculate an energy reserve threshold on the basis of a distance between a battery charging station (5) and the robot (1), the energy reserve threshold relating to a required amount of electrical energy to reach the battery charging station (5),
- compare an actual energy level of the battery units (2) with the energy reserve threshold,
- based on said comparing calculate an optimal route to the battery charging station (5) and return to the battery charging station (5) along the optimal route, and
- switch to a battery exchange posture (150) at the battery charging station (5), the battery exchange posture (150) providing a stable posture without consumption of electrical energy and within the reach of at least one at least partially charged battery unit (298) located in the battery charging station (5).
and/or
wherein the energy management functionality comprises parasite flow prevention in the course of which the robot (1) is configured to
- determine a first operating parameter, particularly an energy level or terminal voltage, of a first battery unit in electrical communication with the mobile robot (1),
- determine a second operating parameter, particularly an energy level or terminal voltage, of a second battery unit in electrical communication with the mobile robot (1),
- provide a parasite flow assessment regarding directions of the flows of electrical energy via the corresponding electrical interfaces of the first and second battery units based on the first and second operating parameters, and
- terminate the electrical energy flow between one of the first or second battery units and the mobile robot based on the parasite flow assessment.

15. A method of changing a swappable battery unit (2) of a mobile robot (1) using a passive battery changing tool mounted by the mobile robot (1),
wherein the passive battery changing tool comprises
- a first gripper (310) and a second gripper (320) mounted in a displaceable manner, and
- a spring-loaded-mechanism (33) connecting said grippers (310,320) and counteracting a displacing said grippers (310,320) thereby providing a gripping force (319), the gripping force (319) acting as a holding force securing the battery unit (2) to the passive battery changing tool,
wherein the battery unit (2) comprises
- a third holding area (233) configured to anchor the first gripper (310), and
- a second holding area (232) configured to be contacted by the second gripper (320),
wherein the method comprises
- selecting (411) a battery unit (2) from a plurality of battery units (2) contained in a battery dock (15) of the robot (1),
- terminating (413) an electrical energy flow between all electrical interfaces (23,24) of the selected battery unit (412) and corresponding mating interfaces (151), and
- gripping (417) and pulling out (418) the selected battery unit (412) of the battery dock (15) of the robot (1) using the passive battery changing tool, in particular inserting the selected battery unit (412) into an empty battery dock (422) of a battery charging station (5),
**characterized in that**
the gripping (417) comprises
- anchoring a first tool part (31) of the passive battery changing tool against the third holding area (233) of the selected battery unit (412),
- applying a separation force (322) in excess of a force (339) provided by spring-loaded-mechanism (33) to increase a gap between the first (310) and second gripper (320) to enable a contact between the second holding area (232) and the second gripper (320), and
- moving the second gripper (320) in contact with the second holding area (232), and
- applying a gripping force (319) projecting from the first gripper (310) towards the second gripper (320) to create a gripping state (350) by reducing the separation force (322) below the force provided by the spring-loaded-mechanism (33),
wherein
- the holding force is solely provided by the spring-loaded-mechanism (33), and
- the separation force (322) is provided by an external force providing mechanism, in particular a movement of a robotic component mounting the passive battery changing tool.

16. Battery charging station (5) for exchanging a swappable battery unit (2) of a mobile robot (1), the mobile robot (1) comprising a battery dock (15) for accommodating a swappable battery unit (2), the battery charging station (5) comprising a charging unit (50) with a plurality of battery docks (15) of the charging unit (50), and a battery-holder-arm (51), wherein
- the battery charging station (5) further comprises a system according to any one of claims 1 to 10, with
o at least one swappable battery units (2), and
o a battery changing tool (3) being mounted to the battery-holder-arm (51).
- each battery dock (15) of the charging unit (50)
o is configured to accommodate the at least one swappable battery unit (2),
o comprises a first mating interface, the first mating interface being configured, when connected to a first electrical interface (23) of the swappable battery unit (2), to supply electrical energy to the swappable battery unit (2), and
o comprises an external power interface (502) configured to draw electrical energy from an external power source (503), in particular a power grid, to provide the electrical energy for the operation of the battery dock (15), and
- the battery-holder-arm (51) comprises a set of joints (511) and links (512) configured to provide a movability of the battery changing tool (3) to approach any one of the battery docks (15) of the charging unit (50).

17. The battery charging station (5) according to claim 16, further comprising a preset exchange location (52) and a guide functionality, wherein
- the preset exchange location (52) is within the reach of the battery-holder-arm (51), and
- the guide functionality is configured to deliver a series of control commands, in particular in the form of visual instructions (521) and/or by wireless communication, to guide the mobile robot (1) to the preset exchange location (52),
in particular wherein the guide functionality is configured to deliver a series of control commands to guide the mobile robot (1) into a preset orientation and stance, more particularly wherein the preset orientation and stance is a battery exchange posture (150) providing a stable posture without consumption of electrical energy.

18. The battery charging station (5) according to any one of claims 16 or 17, further comprising a battery exchange functionality during which the battery charging station (5) is configured to
- select (411) a battery unit from the at least one swappable battery unit (2) contained in the battery dock (15) of the charging unit (50),
- terminate (413) electrical energy flows between all electrical interfaces (23,24) of the selected battery unit (412) and corresponding mating interfaces (151), and
- take (417) and pull out (418) the selected battery unit (412) of the battery dock (15) using the battery changing tool (3), in particular insert (428) the selected battery unit (412) into an empty battery dock (422) of the robot (1).

19. The battery charging station (5) according to claim 18, further comprising an environment perception system (56) configured to derive a relative pose of the mobile robot (1) with respect to the battery-holder-arm (51) and configured to initiate the battery exchange functionality based on the derived pose of the robot.

20. The battery charging station (5) according to claim 18 or 19, wherein the battery exchange functionality further configured to provide a battery stop and battery start signal to the mobile robot (1), wherein
- the battery stop signal is configured to provide commands for terminating (413) the electrical energy flows between all electrical interfaces (23,24) of a selected battery unit (412) and corresponding mating interfaces (151), and
- the battery start signal is configured to provide commands for activating (423) the electrical energy flow between at least one of the electrical interfaces (23,24) of the selected battery unit (412) and the corresponding mating interfaces (151).

21. Transport robot (6) for transporting a swappable battery unit (2) from a battery charging station (5) to a mobile robot (1), the mobile robot (1) comprising a battery dock (15) for accommodating a swappable battery unit (2),
wherein the transport robot (6) comprises
- a locomotion unit (61),
- an environment perception unit (66),
- a navigation unit (67),
- a depot unit (62) configured to contain the swappable battery unit (2) during transportation of the swappable battery unit (2),
- a battery-holder-arm (51), and
- a system according to any one of claims 1 to 10, with
o at least one swappable battery unit (2), and
o a battery changing tool (3) being mounted to a battery-holder-arm (51),
wherein the battery-holder-arm (51) comprises a set of joints (511) and links (512) configured to provide a movability of the battery changing tool (3) to approach the depot unit (62) and the battery dock (15) of the mobile robot (1).

22. The transport robot (6) according to claim 21, further comprising a battery exchange functionality in the course of which the transport robot (6) is configured to
- select (411) a battery unit from the at least one swappable battery unit (2) contained in the depot unit (62), and
- take (417) and pull out (418) the selected battery unit (412) of the depot unit (62) using the battery changing tool (3), in particular insert (428) the selected battery unit (412) into an empty battery dock (422) of the mobile robot (1).

23. The transport robot (6) according to claim 22, wherein the battery exchange functionality further configured to provide a battery stop and battery start signal to the mobile robot (1), wherein
- the battery stop signal is configured to provide commands for terminating (413) electrical energy flows between all electrical interfaces (23,24) of the selected battery unit (412) and corresponding mating interfaces (151), and
- the battery start signal is configured to provide commands for activating (423) the electrical energy flow between at least one of the electrical interfaces (23,24) of the selected battery unit (412) and the corresponding mating interfaces (151).
